# FASCICULE DE BREVET EUROPEEN

(11) **EP 2 965 957 B1**
(45) Date de publication et mention de la délivrance du brevet: **14.02.2018**
(21) Numéro de dépôt: 15174985.0
(22) Date de dépôt: 02.07.2015
(51) Int. Cl.: B60S 1/38, B60S 1/40

(54) **LIAISON PIVOT POUR UN BALAI D'ESSUIE-GLACE DE VÉHICULE**
SCHWENKBARES VERBINDUNGSELEMENT FÜR EIN SCHEIBENWISCHERBLATT EINES FAHRZEUGS
PIVOT LINK FOR A VEHICLE WIPER BLADE

(30) Priorité: 11.07.2014 FR 1456725
(43) Date de publication de la demande: 13.01.2016
(73) Titulaire: Valeo Systèmes d'Essuyage, 78322 Le Mesnil Saint Denis (FR)
(72) Inventeur: BARRET, Guillaume, 63270 LAPS (FR)
(74) Mandataire: Callu Danseux, Violaine

(56) Documents cités:
- EP-A1- 2 607 187
- EP-A2- 2 692 597
- DE-A1-102010 025 687

## Description

La présente invention concerne une liaison pivot pour un balai d'essuie-glace d'une vitre, en particulier arrière, de véhicule, par exemple automobile. La présente invention concerne en outre un ensemble comportant un connecteur mécanique et une telle liaison pivot, un ensemble comportant une telle liaison pivot et un bras d'entraînement d'un balai d'essuie-glace d'une vitre de véhicule, ainsi qu'un balai d'essuie-glace d'une vitre de véhicule.

Une automobile est classiquement équipée d'essuie-glaces pour assurer un lavage d'une vitre et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames d'essuyage réalisées en une matière élastique. Ces lames frottent contre la vitre et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure de la vitre, soit, dans une version plus récente dénommée « flat blade » (pour « lame plate »), d'un ensemble semi-rigide qui maintient la lame d'essuyage sur toute sa longueur grâce à une ou des vertèbres de cintrage permettant d'appliquer le balai sur la vitre sans avoir à utiliser d'étriers.

Dans le cas d'un « flat blade », le balai comprend un connecteur mécanique qui comprend ou porte une liaison pivot destinée à coopérer avec le bras ou un élément porté par le bras afin d'autoriser le pivotement du balai vis-à-vis du bras, par exemple pour faciliter le remplacement de la lame d'essuyage en cas d'usure.

Dans la technique actuelle, une liaison pivot pour un balai d'essuie-glace est simplement formée par un axe cylindrique, qui est en général reçu dans un logement cylindrique du connecteur.

Par ailleurs, il est connu d'équiper un balai d'essuie-glace de moyens de projection de liquide lave-glace sur la vitre à essuyer. Ces moyens de projection sont alimentés en liquide lave-glace par des moyens de distribution fluidique, qui sont en général formés dans le connecteur.

Document EP 2 692 597 A montre une liaison pivot pour un balai d'essuie-glace d'une vitre de véhicule telle que décrite dans le préambule de la première revendication. La présente invention propose un perfectionnement à cette technologie qui permet notamment de simplifier la fabrication d'un connecteur pour un balai d'essuie-glace équipé de moyens de projection de fluide, et en particulier de liquide lave-glace.

L'invention propose à cet effet une liaison pivot pour un balai d'essuie-glace d'une vitre de véhicule, en particulier automobile, la liaison pivot comprenant un axe sensiblement cylindrique configuré pour être fixé sur un connecteur mécanique dudit balai, caractérisée en ce qu'elle comprend des moyens de distribution fluidique, et en ce qu'elle comprend au moins un organe anti-rotation configuré pour coopérer avec ledit connecteur afin d'empêcher toute rotation de la liaison pivot vis-à-vis du connecteur.

L'invention propose ainsi d'équiper la liaison pivot de moyens de distribution fluidique et donc d'ajouter une fonction complémentaire (distribution de fluide) à la liaison pivot. Le connecteur mécanique peut ainsi lui-même être dépourvu de moyens de distribution fluidique, ce qui permet de simplifier sa fabrication. Et il est particulièrement avantageux que la liaison pivot soit rendue solidaire en rotation du connecteur, afin que les moyens de distribution fluidique puissent être facilement implantés au voisinage de ce connecteur pour permettre la distribution vers le balai.

La liaison pivot peut comprendre une ou plusieurs des caractéristiques ci-dessous, prises isolément les unes des autres ou en combinaison les unes avec les autres :
- la liaison pivot est amovible, c'est-à-dire qu'elle est rapportée et fixée sur le connecteur mécanique et qu'elle peut être démontée de ce dernier sans destruction.
- la liaison pivot est formée d'une seule pièce,
- lesdits moyens de distribution fluidique sont reliés à une partie médiane dudit axe sensiblement cylindrique,
- lesdits moyens de distribution fluidique comprennent au moins une canule d'entrée de fluide et au moins une canule de sortie de fluide,
- les axes des canules sont sensiblement perpendiculaires entre eux et/ou audit axe sensiblement cylindrique,
- lesdits axes des canules s'étendent dans un plan sensiblement perpendiculaire audit axe sensiblement cylindrique et passant sensiblement au milieu de cet axe sensiblement cylindrique,
- la liaison pivot comprend au moins une nervure anti-rotation, cette nervure s'étendant de préférence sur l'axe sensiblement cylindrique, sensiblement parallèlement à celui-ci, et
- ladite au moins une nervure est reliée auxdits moyens de distribution fluidique.

La présente invention concerne également un ensemble comportant un connecteur mécanique et une liaison pivot telle que décrite ci-dessus, pour un balai d'essuie-glace d'une vitre de véhicule, en particulier automobile, le connecteur comportant des moyens de fixation à une lame d'essuyage dudit balai ou à un organe de support de ladite lame d'essuyage dudit balai.

L'ensemble peut comprendre une ou plusieurs des caractéristiques ci-dessous, prises isolément les unes des autres ou en combinaison les unes avec les autres :
- le connecteur comprend au moins un logement de réception, de préférence par encliquetage élastique, de l'axe sensiblement cylindrique de la liaison pivot,
- l'ensemble comporte des moyens d'anti-rotation configurés pour empêcher toute rotation de la liaison pivot vis-à-vis du connecteur.
- le connecteur comprend au moins une encoche de réception d'une nervure anti-rotation de la liaison pivot, et
- le connecteur comprend au moins un orifice traversé par une canule des moyens de distribution fluidique de la liaison pivot.

La présente invention concerne encore un balai d'essuie-glace d'une vitre de véhicule, en particulier automobile, comprenant une liaison pivot ou un ensemble tel que décrit ci-dessus.

La présente invention concerne enfin un ensemble comportant une liaison pivot telle que décrite ci-dessus et un bras d'entraînement d'un balai d'essuie-glace d'une vitre de véhicule, en particulier automobile, le bras comportant au moins une patte, et de préférence deux pattes, la ou chaque patte comportant un logement de réception, de préférence par encliquetage élastique, et de rotation de l'axe sensiblement cylindrique de la liaison pivot.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique partielle en perspective éclatée d'un essuie-glace d'une vitre de véhicule, selon un mode de réalisation de l'invention,
- les figures 2 et 3 sont des vues schématiques respectivement en coupe transversale et en perspective d'une lame d'essuyage et de vertèbres de rigidification du balai de l'essuie-glace de la figure 1,
- les figures 4 et 5 sont des vues schématiques partielles en perspective du balai de l'essuie-glace de la figure 1 et représente l'ensemble comportant le connecteur mécanique et la liaison pivot de ce balai, et
- la figure 6 est une vue schématique partielle en perspective de l'essuie-glace de la figure 1.

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport à l'axe de rotation du balai, la dénomination intérieure correspondant à la partie du balai située du côté de cet axe de rotation. Enfin, les directions référencées comme supérieures ou inférieures correspondent à des orientations perpendiculaires au plan de rotation du balai, la dénomination inférieure contenant le plan de la vitre à essuyer.

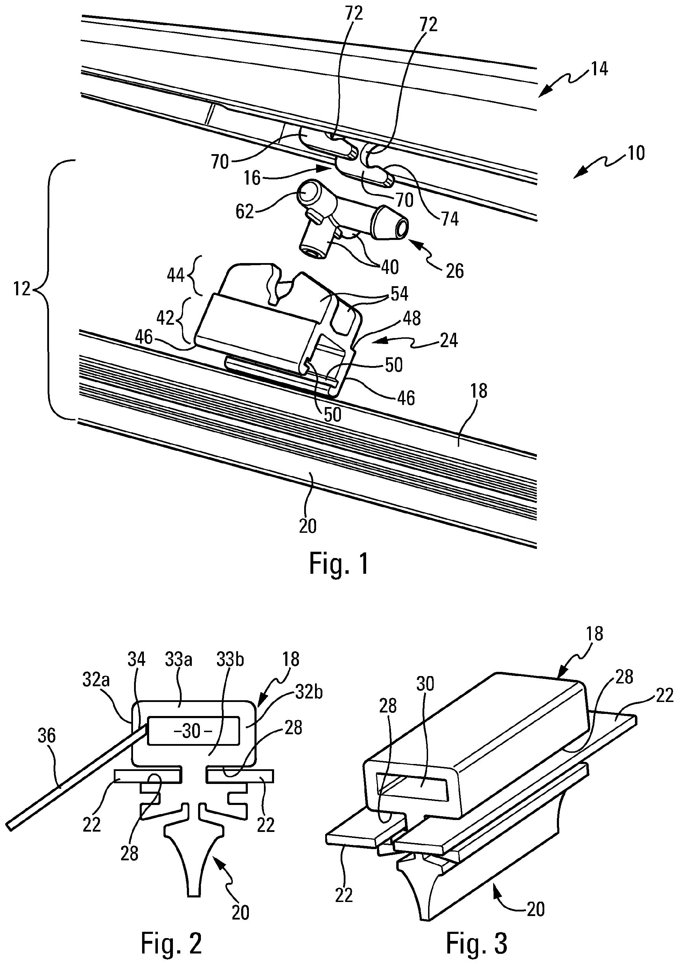

Les figures 1 à 6 illustrent un mode de réalisation de l'invention et montrent un essuie-glace 10 qui est particulièrement adapté mais non exclusivement pour l'essuyage d'une vitre arrière de véhicule automobile.

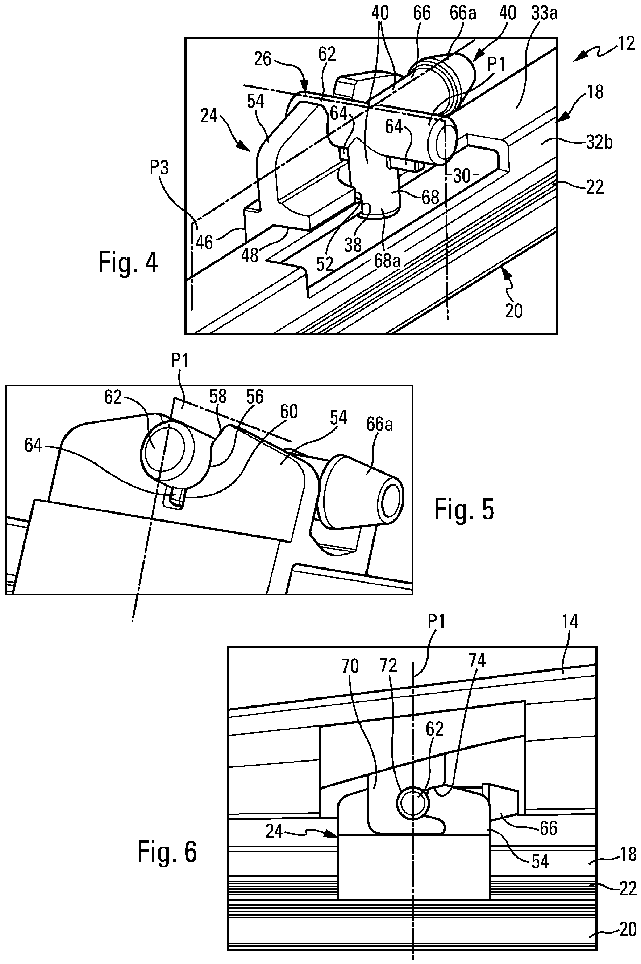

L'essuie-glace 10 comprend pour l'essentiel deux éléments : un balai longitudinal 12 et un bras longitudinal 14 d'entraînement du balai. Le bras 14, représenté aux figures 1 et 6, s'étend le long d'au moins une partie du balai pour le recouvrir et le protéger. Il comprend à une extrémité longitudinale (non visible) des moyens de fixation à un arbre d'un moteur électrique d'entraînement du bras, et comporte en outre des moyens 16 de fixation du balai, qui seront décrits plus en détail dans ce qui suit.

Le balai 12 comprend un corps longitudinal 18 portant une lame d'essuyage 20, au moins une et ici deux vertèbres de rigidification 22, un connecteur mécanique 24 équipé d'une liaison pivot 26 pour le raccordement du balai 12 au bras 14, et des embouts d'extrémité (non visibles).

La lame d'essuyage 20 est réalisée en caoutchouc et est destinée à frotter contre la vitre du véhicule pour évacuer l'eau en l'amenant en dehors du champ de vision du conducteur. Le corps 18 comporte des rainures longitudinales latérales 28 dans lesquelles sont logées respectivement les deux vertèbres 22 (figures 2 et 3). Ces vertèbres 22 sont parallèles et coplanaires et rigidifient la lame d'essuyage 20, de manière à favoriser son application sur la vitre. Le corps 18 et la lame 20 sont ici réalisés d'une seule pièce.

Le corps 18 est tubulaire et a en section une forme sensiblement rectangulaire. Le corps 18 comprend deux parois longitudinales latérales 32a, 32b sensiblement parallèles et reliées entre elles par deux parois longitudinales, respectivement supérieure 33a, et inférieure 33b, sensiblement parallèles.

Les parois du corps 18 définissent une cavité longitudinale interne 30 de circulation de liquide lave-glace. Au moins une des parois latérales 32a du corps est percée d'orifices 34 pour la projection de liquide lave-glace 36 sur la vitre à essuyer.

Comme cela est visible en figure 4, la paroi supérieure 33a du corps 18 (qui a ici été découpée pour plus de clarté) comprend un orifice 38 traversant de montage de moyens 40 de distribution fluidique, qui seront décrits plus en détail dans ce qui suit. Ces moyens de distribution 40 assurent l'alimentation en liquide lave-glace de la cavité 30 du corps 18.

Chaque embout d'extrémité est emboîté sur une extrémité longitudinale du corps 18 et sur les extrémités longitudinales correspondantes des vertèbres 22, et est destiné à maintenir ces dernières dans les rainures 28 du corps 18.

Le connecteur 24 comprend essentiellement deux parties : des moyens inférieurs 42 de fixation au corps 18 et des moyens supérieurs 44 de fixation de la liaison pivot 26.

Les moyens inférieurs de fixation 42 ont en section transversale une forme sensiblement en U renversé et comprennent deux parois latérales longitudinales 46 sensiblement parallèles et à distance l'une de l'autre et qui sont reliées entre elles à leurs extrémités supérieures par une paroi supérieure 48. Les parois latérales 46 sont destinées à s'étendre de part et d'autre d'une partie du corps 18 et comportent chacune, une rainure longitudinale 50 de réception d'une partie d'extrémité longitudinale d'une vertèbre 22. L'insertion des vertèbres 22 dans les rainures 28 du corps 18 et les rainures 50 du connecteur 24 assure la fixation du connecteur au corps.

La paroi supérieure 48 du connecteur 24 est sensiblement plane et s'étend au-dessus de la paroi supérieure 33a du corps, sensiblement parallèlement à celle-ci. En position de montage, les parois 48, 33a peuvent être en contact.

La paroi 48 comprend un orifice traversant 52 qui est aligné avec l'orifice du corps 18 pour le passage des moyens 40 de distribution fluidique. L'orifice 52 a un diamètre qui est ici supérieur à celui de l'orifice 38.

Les moyens supérieurs de fixation 44 ont en section transversale une forme sensiblement en U et comprennent deux pattes latérales longitudinales 54 sensiblement parallèles et à distance l'une de l'autre et qui sont reliées entre elles à leurs extrémités inférieures par la paroi supérieure 48. Les pattes latérales 54 sont destinées à s'étendre de part et d'autre du débouché supérieur de l'orifice 52 de la paroi supérieure 48.

Chaque patte 54 comprend un logement 56 de réception, ici par encliquetage élastique, d'une partie de la liaison pivot 26 (figure 5). Chaque logement 56 a une forme générale cylindrique. Les logements 56 sont coaxiaux. Chaque logement 56 débouche sur un bord longitudinal supérieur de la patte 54 correspondante par l'intermédiaire d'une ouverture radiale 58 (ici évasée vers le haut). De plus, chaque logement 56 comprend une encoche 60 sensiblement radiale. L'encoche 60 s'étend sensiblement radialement et est diamétralement opposée par rapport à l'ouverture 58.

On note P1 le plan transversal, sensiblement vertical, passant par le milieu des encoches 60, des logements 56 et des ouvertures 58, et passant en outre par le milieu de l'orifice 52.

La liaison pivot 26 comprend pour l'essentiel deux parties : un axe transversal 62 sensiblement cylindrique et les moyens 40 précités de distribution fluidique.

L'axe 62 est destiné à être engagé par encliquetage élastique dans les logements 56 du connecteur. Il a une longueur supérieure à la largeur ou dimension transversale des moyens de fixation supérieurs 44 du connecteur 24 de façon à ce que les parties d'extrémité longitudinale de l'axe 62 soient en saillie sur les faces latérales externes des pattes 54 du connecteur, comme cela est visible en figure 5 notamment.

Des nervures anti-rotation 64 sont prévues en saillie sur l'axe 62 pour coopérer avec les encoches 60 du connecteur. Les nervures 64 ont une orientation longitudinale et s'étendent vers le bas depuis l'axe 62. Une de leurs extrémités longitudinales est reliée aux moyens de distribution 40 et l'autre de leurs extrémités longitudinales est libre et destinée à être engagée dans une encoche 60. Les nervures 64 coopèrent par butée avec les bords des encoches 60 pour empêcher toute rotation de l'axe 62 dans les logements 56, et ainsi toute rotation de la liaison pivot 26 vis-à-vis du connecteur 24.

En position de montage représentée en figure 5, l'extrémité libre de chaque nervure 64 est sensiblement alignée avec la face latérale externe de la patte 54 correspondante du connecteur 24.

Les moyens 40 de distribution fluidique comprennent ici deux canules, respectivement d'entrée 66 et de sortie 68 de fluide (liquide lave-glace). Les canules 66, 68 sont tubulaires et sensiblement cylindriques. Elles ont chacune une orientation rectiligne. Les axes des cannelures 66, 68 sont sensiblement perpendiculaires. Ils sont en outre sensiblement perpendiculaires à l'axe 62. Ils s'étendent dans un plan P3 passant sensiblement au milieu de l'axe 62.

La canule d'entrée 66 est ici sensiblement horizontale en position de montage et comprend une extrémité longitudinale raccordée par l'intermédiaire de l'axe 62 à une extrémité longitudinale supérieure de la canule de sortie 68. La partie d'extrémité longitudinale 66a de la canule d'entrée 66, opposée à l'axe 62, est configurée pour être emboîtée dans une extrémité d'un tuyau souple et est ici conformée pour faciliter et maintenir cet emboîtement. La partie d'extrémité longitudinale inférieure 68a de la canule de sortie 68 est configurée pour traverser avec jeu l'orifice 52 du connecteur 24 et pour être emboîtée sans jeu ou avec ajustement serré dans l'orifice 38 du corps 18 (figure 4).

Les canules 66, 68 sont ici raccordées entre elles par une partie médiane de l'axe 62 qui comprend un passage interne (non visible) de raccordement fluidique des canules. En position de montage, les canules 66, 68 s'étendent entre les pattes latérales 54 du connecteur 24.

La liaison pivot comportant les canules 66, 68, les nervures 64 et l'axe 62, est ici formée d'une seule pièce.

Les figures 1 et 6 montrent les moyens 16 de fixation et d'articulation du bras 14 au balai 12, et en particulier à la liaison pivot 26 porté par le balai.

Dans l'exemple représenté, le bras 14 comprend deux pattes latérales inférieures 70 comportant chacune un logement 72 de réception, ici par encliquetage élastique, d'une partie d'extrémité longitudinale de l'axe 62. Les pattes 70 sont sensiblement parallèles et ont une orientation sensiblement longitudinale. Elles sont écartées en direction transversale l'une de l'autre d'une distance supérieure à la largeur ou dimension transversale des moyens de fixation 44 du connecteur 24 mais inférieure à la longueur de l'axe 62 pour autoriser le montage précité.

Les logements 72 ont un diamètre légèrement supérieur à celui de l'axe 62 pour autoriser sa rotation et donc un pivotement du balai vis-à-vis du bras.

Le logement 72 de chaque patte 70 est ici relié à une ouverture 74 sensiblement radiale (par rapport à l'axe transversal du logement) qui débouche ici sur un bord intérieur de la patte 70. Les parties d'extrémité de l'axe 62 sont engagées dans les logements 72 en passant par les ouvertures 74. On comprend ainsi que le balai 12 est monté sur le bras 14 en déplaçant en translation le balai vis-à-vis du bras dans une direction parallèle à l'axe longitudinal du balai, jusqu'à ce que l'axe 62 soit reçu par encliquetage élastique dans les logements 72 des pattes 70. Ceci permet de prévoir deux directions différentes pour le montage de la liaison pivot 26 sur le connecteur 24 et pour le montage du bras sur le balai, le démontage du bras vis-à-vis du balai par translation longitudinale de l'un par rapport à l'autre ne risquant pas d'entraîner un démontage involontaire de la liaison pivot 26 vis-à-vis du connecteur 24. En d'autres termes, les ouvertures 74, par lesquelles la liaison pivot 26 est insérée dans le bras 14, sont orientées sensiblement perpendiculairement à la direction d'extension de la nervure anti-rotation 64 et à l'orientation générale de l'encoche 60 dans lequel l'axe 62 est inséré.

En variante, le logement 72 de chaque patte 70 peut être relié à une ouverture débouchant ici sur un bord inférieur de la patte, de façon à ce que le balai 12 soit monté sur le bras 14 en déplaçant en translation le balai vis-à-vis du bras dans une direction sensiblement parallèle à l'axe de la canule 68, jusqu'à ce que l'axe 62 soit reçu par encliquetage élastique dans les logements 72 des pattes 70. La force nécessaire pour retirer et démonter le balai du bras est alors de préférence inférieure à celle nécessaire pour démonter la liaison pivot du connecteur, de façon à ce que la séparation du balai du bras, par traction de l'un par rapport à l'autre dans une direction parallèle à l'axe de la canule 68, n'entraîne pas forcément le démontage de la liaison pivot 26 du connecteur 24.

L'essuie-glace 10 selon l'invention peut être monté de la façon suivante. Le connecteur 24 est disposé sur le corps 18 de sorte que ses parois latérales inférieures 46 s'étendent de part et d'autre du corps 18 et que ses rainures 50 soient situées en regard des rainures 28 du corps. Les vertèbres 22 sont engagées dans les rainures 28, 50 en les faisant coulisser longitudinalement, ce qui assure la retenue et la fixation du connecteur 24 vis-à-vis du corps 18. Les embouts d'extrémité sont assemblés pour maintenir l'ensemble. La liaison pivot 26 est rapportée et fixée sur le connecteur 24 en la présentant comme illustré en figure 1 et en la déplaçant en translation, du haut vers le bas, dans une direction parallèle à l'axe des orifices 52, 38, jusqu'à ce que la canule de sortie 68 pénètre dans l'orifice 38 du corps 18 et que l'axe 62 soit logé dans les logements 56 du connecteur. Enfin, le balai 12 est fixé au bras 14 comme expliqué dans ce qui précède. Dans l'ensemble ainsi formé, la liaison pivot 26 est solidaire en rotation du connecteur 24.

## Revendications

1. Liaison pivot (26) pour un balai (12) d'essuie-glace (10) d'une vitre de véhicule, en particulier automobile, la liaison pivot comprenant un axe (62) sensiblement cylindrique configuré pour être fixé sur un connecteur mécanique (24) dudit balai, et des moyens (40) de distribution fluidique, **caractérisé en ce qu'**elle comprend au moins un organe anti-rotation (64) configuré pour coopérer avec ledit connecteur (24) afin d'empêcher toute rotation de la liaison pivot vis-à-vis du connecteur.

2. Liaison pivot (26) selon la revendication 1, **caractérisée en ce qu'**elle est formée d'une seule pièce.

3. Liaison pivot (26) selon la revendication 1 ou 2, **caractérisée en ce que** lesdits moyens (40) de distribution fluidique sont reliés à une partie médiane dudit axe (62) sensiblement cylindrique.

4. Liaison pivot (26) selon l'une des revendications précédentes, **caractérisée en ce que** lesdits moyens (40) de distribution fluidique comprennent au moins une canule (66) d'entrée de fluide et au moins une canule (68) de sortie de fluide.

5. Liaison pivot (26) selon la revendication 4, **caractérisée en ce que** les axes des canules (66, 68) sont sensiblement perpendiculaires entre eux et/ou audit axe (62) sensiblement cylindrique.

6. Liaison pivot (26) selon la revendication 4 ou 5, **caractérisée en ce que** lesdits axes des canules (66, 68) s'étendent dans un plan (P3) sensiblement perpendiculaire audit axe (62) sensiblement cylindrique et passant sensiblement au milieu de cet axe sensiblement cylindrique.

7. Liaison pivot (26) selon la revendication précédente, **caractérisée en ce qu'**elle comprend au moins une nervure anti-rotation (64), cette nervure s'étendant de préférence sur l'axe (62) sensiblement cylindrique, sensiblement parallèlement à celui-ci.

8. Liaison pivot (26) selon la revendication précédente, **caractérisée en ce que** ladite au moins une nervure (64) est reliée auxdits moyens (40) de distribution fluidique.

9. Ensemble comportant un connecteur mécanique (24) et une liaison pivot (26) selon l'une des revendications précédentes, pour un balai (12) d'essuie-glace (10) d'une vitre de véhicule, en particulier automobile, le connecteur comportant des moyens (42) de fixation à une lame d'essuyage (20) dudit balai ou à un organe de support de ladite lame d'essuyage dudit balai.

10. Ensemble selon la revendication 9, **caractérisé en ce que** le connecteur (24) comprend au moins un logement (56) de réception, de préférence par encliquetage élastique, de l'axe (62) sensiblement cylindrique de la liaison pivot (26).

11. Ensemble selon l'une des revendications 9 ou 10, **caractérisé en ce qu'**il comporte des moyens d'anti-rotation configurés pour empêcher toute rotation de la liaison pivot (26) vis-à-vis du connecteur (24).

12. Ensemble selon la revendication précédente, **caractérisé en ce que** le connecteur (24) comprend au moins une encoche (60) de réception d'une nervure anti-rotation (64) de la liaison pivot (26).

13. Ensemble selon l'une des revendications 10 à 12, **caractérisé en ce que** le connecteur (24) comprend au moins un orifice (52) traversé par une canule (68) des moyens (40) de distribution fluidique de la liaison pivot (26).

14. Balai (12) d'essuie-glace (10) d'une vitre de véhicule, en particulier automobile, comprenant une liaison pivot (26) selon l'une des revendications 1 à 9 ou un ensemble selon l'une des revendications 10 à 13.

15. Ensemble comportant une liaison pivot (26) selon l'une des revendications 1 à 8 et un bras (14) d'entraînement d'un balai (12) d'essuie-glace (10) d'une vitre de véhicule, en particulier automobile, le bras comportant au moins une patte (70), et de préférence deux pattes, la ou chaque patte comportant un logement (72) de réception, de préférence par encliquetage élastique, et de rotation de l'axe (62) sensiblement cylindrique de la liaison pivot (26).

## Patentansprüche

1. Schwenkverbindung (26) für ein Blatt (12) eines Wischers (10) einer Scheibe eines Fahrzeugs, insbesondere eines Kraftfahrzeugs, wobei die Schwenkverbindung einen im Wesentlichen zylinderförmigen Bolzen (62), der dazu konfiguriert ist, an einem mechanischen Verbinder (24) des Blatts fixiert zu werden, und Mittel (40) zur Fluidverteilung umfasst, **dadurch gekennzeichnet, dass** sie mindestens ein Verdrehsicherungsglied (64) umfasst, das zum dahingehenden Zusammenwirken mit dem Verbinder (24), jegliche Drehung der Schwenkverbindung bezüglich des Verbinders zu verhindern, konfiguriert ist.

2. Schwenkverbindung (26) nach Anspruch 1, **dadurch gekennzeichnet, dass** sie einstückig ausgebildet ist.

3. Schwenkverbindung (26) nach Anspruch 1 oder 2, **dadurch gekennzeichnet, dass** die Mittel (40) zur Fluidverteilung mit einem mittleren Teil des Bolzens (62), der im Wesentlichen zylinderförmig ist, verbunden sind.

4. Schwenkverbindung (26) nach einem der vorhergehenden Ansprüche, **dadurch gekennzeichnet, dass** die Mittel (40) zur Fluidverteilung mindestens eine Fluideintrittskanüle (66) und mindestens eine Fluidaustrittskanüle (68) umfassen.

5. Schwenkverbindung (26) nach Anspruch 4, **dadurch gekennzeichnet, dass** die Achsen der Kanülen (66, 68) im Wesentlichen senkrecht zueinander und/oder zu dem im Wesentlichen zylinderförmigen Bolzen (62) sind.

6. Schwenkverbindung (26) nach Anspruch 4 oder 5, **dadurch gekennzeichnet, dass** sich die Achsen der Kanülen (66, 68) in einer Ebene (P3) im Wesentlichen senkrecht zu dem im Wesentlichen zylinderförmigen Bolzen (62) erstrecken und im Wesentlichen durch die Mitte dieses im Wesentlichen zylinderförmigen Bolzens hindurch verlaufen.

7. Schwenkverbindung (26) nach dem vorhergehenden Anspruch, **dadurch gekennzeichnet, dass** sie mindestens eine Verdrehsicherungsrippe (64) umfasst, wobei sich die Rippe vorzugsweise auf dem im Wesentlichen zylinderförmigen Bolzen (62) im Wesentlichen parallel zu diesem erstreckt.

8. Schwenkverbindung (26) nach dem vorhergehenden Anspruch, **dadurch gekennzeichnet, dass** die mindestens eine Rippe (64) mit den Mitteln (40) zur Fluidverteilung verbunden ist.

9. Anordnung, die einen mechanischen Verbinder (24) und eine Schwenkverbindung (26) nach einem der vorhergehenden Ansprüche umfasst, für ein Blatt (12) eines Wischers (10) einer Scheibe eines Fahrzeugs, insbesondere eines Kraftfahrzeugs, wobei der Verbinder Mittel (42) zur Befestigung an einem Wischergummi (20) des Blatts oder an einem Stützglied des Wischergummis des Blatts umfasst.

10. Anordnung nach Anspruch 9, **dadurch gekennzeichnet, dass** der Verbinder (24) mindestens eine Einlassung (56) zur Aufnahme, vorzugsweise durch elastisches Einrasten, des im Wesentlichen zylinderförmigen Bolzens (62) der Schwenkverbindung (26) umfasst.

11. Anordnung nach einem der Ansprüche 9 oder 10, **dadurch gekennzeichnet, dass** sie Verdrehsicherungsmittel umfasst, die dazu konfiguriert sind, jegliche Drehung der Schwenkverbindung (26) bezüglich des Verbinders (24) zu verhindern.

12. Anordnung nach dem vorhergehenden Anspruch, **dadurch gekennzeichnet, dass** der Verbinder (24) mindestens eine Aussparung (60) zur Aufnahme einer Verdrehsicherungsrippe (64) der Schwenkverbindung (26) umfasst.

13. Anordnung nach einem der Ansprüche 10-12, **dadurch gekennzeichnet, dass** der Verbinder (24) mindestens eine Öffnung (52) umfasst, die von einer Kanüle (68) der Mittel (40) zur Fluidverteilung der Schwenkverbindung (26) durchquert wird.

14. Blatt (12) eines Wischers (10) einer Scheibe eines Fahrzeugs, insbesondere eines Kraftfahrzeugs, das eine Schwenkverbindung (26) nach einem der Ansprüche 1-9 oder eine Anordnung nach einem der Ansprüche 10-13 umfasst.

15. Anordnung, die eine Schwenkverbindung (26) nach einem der Ansprüche 1-8 und einen Antriebsarm (14) für ein Blatt (12) eines Wischers (10) einer Scheibe eines Fahrzeugs, insbesondere eines Kraftfahrzeugs, umfasst, wobei der Arm mindestens eine Lasche (70), und vorzugsweise zwei Laschen, umfasst, wobei die oder jede Lasche eine Einlassung (72) zur Aufnahme, vorzugsweise durch elastisches Einrasten, und zum Drehen des im Wesentlichen zylinderförmigen Bolzens (62) der Schwenkverbindung (26) umfasst.

## Claims

1. Pivot link (26) for a blade (12) of a wiper (10) of a vehicle window, in particular in a motor car, the pivot link comprising a substantially cylindrical shaft (62) designed to be attached to a mechanical connector (24) of said blade, and fluid-distribution means (40), **characterized in that** it includes at least one anti-rotation member (64) designed to cooperate with said connector (24) in order to prevent the pivot link from rotating in relation to the connector.

2. Pivot link (26) according to Claim 1, **characterized in that** it is formed from a single part.

3. Pivot link (26) according to Claim 1 or 2, **characterized in that** said fluid distribution means (40) are linked to a median portion of said substantially cylindrical shaft (62).

4. Pivot link (26) according to one of the preceding claims, **characterized in that** said fluid distribution means (40) include at least one fluid inlet tube (66) and at least one fluid outlet tube (68).

5. Pivot link (26) according to Claim 4, **characterized in that** the axes of the tubes (66, 68) are substantially perpendicular to one another and/or to said substantially cylindrical shaft (62).

6. Pivot link (26) according to Claim 4 or 5, **characterized in that** said axes of the tubes (66, 68) extend in a plane (P3) substantially perpendicular to said substantially cylindrical shaft (62) and pass substantially through the middle of said substantially cylindrical shaft.

7. Pivot link (26) according to the preceding claim, **characterized in that** it includes at least one anti-rotation rib (64), this rib extending preferably on the substantially cylindrical shaft (62), substantially parallel to same.

8. Pivot link (26) according to the preceding claim, **characterized in that** said at least one rib (64) is linked to said fluid distribution means (40).

9. Assembly comprising a mechanical connector (24) and a pivot link (26) according to one of the preceding claims for a blade (12) of a wiper (10) of a vehicle window, in particular in a motor car, the connector comprising attachment means (42) for a squeegee (20) of said blade or for a supporting member for said squeegee of said blade.

10. Assembly according to Claim 9, **characterized in that** the connector (24) includes at least one seat (56) for receiving the substantially cylindrical shaft (62) of the pivot link (26), preferably by elastic snap-fitting.

11. Assembly according to Claim 9 or 10, **characterized in that** it includes anti-rotation means designed to prevent the pivot link (26) from rotating in relation to the connector (24).

12. Assembly according to the preceding claim, **characterized in that** the connector (24) includes at least one notch (60) for receiving an anti-rotation rib (64) of the pivot link (26).

13. Assembly according to one of Claims 9 to 12, **characterized in that** the connector (24) includes at least one hole (52) traversed by a tube (68) of the fluid distribution means (40) of the pivot link (26).

14. Blade (12) of a wiper (10) of a vehicle window, in particular in a motor car, including a pivot link (26) according to one of Claims 1 to 8 or an assembly according to one of Claims 9 to 13.

15. Assembly including a pivot link (26) according to one of the claims 1 to 8 and a drive arm (14) of a blade (12) of a wiper (10) of a vehicle window, in particular in a motor car, the arm having at least one and preferably two legs (70), the or each leg having a seat (72) for rotatably receiving the substantially cylindrical shaft (62) of the pivot link (26), preferably by elastic snap-fitting.
